# EUROPEAN PATENT APPLICATION

(11) **EP 4 708 227 A1**
(43) Date of publication of application: **11.03.2026**
(21) Application number: 25200997.2
(22) Date of filing: 09.09.2025
(51) Int. Cl.: G06V 20/59

(54) **FEEDBACK METHOD AND APPARATUS FOR OBJECT SEARCHING IN VEHICLES**

(30) Priority: 09.09.2024 CN 202411259867
(71) Applicant: Cariad (China) Co., Ltd., Beijing 100028 (CN)
(72) Inventor: WEN, Yue, Beijing, 100028 (CN); DANG, Yue, Beijing, 100028 (CN)
(74) Representative: Müller-Boré & Partner Patentanwälte PartG mbB

(57) **Abstract**

The present invention provides a feedback method (1000) and apparatus for object searching in a vehicle. The method comprises identifying (S1100) information about vehicle information where a target object is located, based on an object position of the target object; and converting (S1200) the information about the vehicle environment into speech information. According to the present invention, it is possible to identify environment information of the target object based on the object position of the target object and convert the environment information into speech information for feedback, thereby effectively satisfying the user's object searching demand and improving the user's experience without affecting the user's driving and riding space.

## Description

### FIELD

The present invention relates to the field of vehicle identification, and specifically to a feedback method and apparatus for object searching in a vehicle.

### BACKGROUND

As the vehicle industry develops constantly and people's living standard improves increasingly, vehicles are prevailingly used in people's daily life. When a driver needs to search for an object while operating the vehicle, he needs to transfers his attention away from the road so that he cannot focus his attention to driving or a response time upon confronting an accident event is prolonged, such that a traffic accident is prone to occur.

To solve the above problem, a technical solution is proposed in the relevant art to use a robotic arm to grasp a lost object to help the user to complete the demand to search for the object. However, the provision of the robotic arm will substantially occupy the space in the vehicle cabin, and the space normally used by the user will also be occupied while the robotic arm moves to grasp the object, which will seriously affect the user's driving and riding experience.

Therefore, it is urgently necessary to provide an object searching feedback method and apparatus which can satisfy the user's demands for object searching without affecting the user' driving and riding experience, thereby overcoming the above problem.

It needs to be appreciated that the information disclosed in the Background is only used to enable understanding of the present invention, and therefore it might contain information that does not constitute the prior art already known by those skilled in the art.

### SUMMARY

In order to solve the problems existing in the prior art, the present invention provides a feedback method and apparatus for object searching in a vehicle, capable of identifying environment information of a target object based on an object position of the target object and converting the environment information into speech information for feedback, thereby effectively satisfying the user's object-searching demand and improving the user's experience without affecting the user's driving and riding space.

The present invention provides a feedback method for object searching in a vehicle, comprising:
identifying information about a vehicle environment where a target object is located, based on an object position of the target object; and
converting the information about the vehicle environment into speech information.

According to an embodiment of the present invention, the identifying information about a vehicle environment where a target object is located, based on an object position of the target object comprises:
acquiring a semantic image for determining the object position; and
determining the information about the vehicle environment where the target object is located, based on semantics corresponding to the semantic image.

According to an embodiment of the present invention, the method further comprises:
acquiring a vehicle environment image; and
performing semantic segmentation on the vehicle environment image using a semantic segmentation module, to obtain a semantic image respectively corresponding to each piece of information about the vehicle environment.

According to an embodiment of the present invention, the identifying information about a vehicle environment where a target object is located, based on an object position of the target object comprises:
acquiring an environmental reference object corresponding to the target object, and a positional relationship between the target object and the environmental reference object; and
determining the information about the vehicle environment where the target object is located, based on the environmental reference object and the positional relationship between the target object and the environmental reference object.

According to an embodiment of the present invention, the acquiring an environmental reference object corresponding to the target object comprises:
determining the environmental reference object in an occlusion relationship with the target object based on depth analysis.

According to an embodiment of the present invention, the acquiring an environmental reference object corresponding to the target object comprises:
determining a pixel area corresponding to the target object;
determining a pixel search area based on the pixel area, and identifying any said environmental reference object in the pixel search area; and
when the environmental reference object is not identified, expanding a scope of the pixel search area according to a preset rule until the environmental reference object is identified from the pixel search area.

According to an embodiment of the present invention, the converting the information about the vehicle environment into speech information comprises:
acquiring a text description corresponding to the target object and the information about the vehicle environment; and
converting the text description into speech information based on a Text-to-Speech technique.

According to an embodiment of the present invention, the acquiring a text description corresponding to the target object and the information about the vehicle environment comprises:
acquiring a text identifier of the target object, a text identifier of the environmental reference object and a text identifier corresponding to the positional relationship between the target object and the environmental reference object, respectively; and
performing semantic fusion on the text identifications and the positional relationship to obtain the text description.

According to an embodiment of the present invention, the method further comprises:
receiving an object-searching request input by the user via a speech, and determining the target object to be sought for according to the object-searching request; and
acquiring a vehicle environment image in response to the object-searching request, and determining the object position of the target object according to the vehicle environment image.

According to an embodiment of the present invention, the information about the vehicle environment comprises the environmental reference object and/or the positional relationship between the target object and the environmental reference object; the environmental reference object comprises one or more of a center console of the vehicle, a driver's seat, a front passenger's seat, a rear seat, a driver's door, a front passenger's door, a rear door and a trunk.

According to another aspect of the present invention, there is further provided a feedback apparatus for object searching in a vehicle, comprising:
an identification module configured to recognize information about a vehicle environment where a target object is located, based on an object position of the target object; and
a conversion module configured to convert the information about the vehicle environment into speech information.

According to a further aspect of the present invention, there is further provided a computer device, comprising: a memory, a processor, and a computer program stored on the memory and executable on the processor which, when executed by the processor, implements the steps of the feedback method for object searching in a vehicle described above.

According to a further aspect of the present invention, there is further provided a computer-readable storage medium having a computer program stored thereon which, when executed by a processor, implements the steps of the feedback method for object searching in a vehicle described above.

According to a further aspect of the present invention, there is further provided a computer program product comprising computer instructions which, when executed by a processor, implements the steps of the feedback method for object searching in a vehicle described above.

By the feedback method for object searching in a vehicle according to the embodiments of the present application, it is possible to, on the basis of quickly and accurately finding the target object for the driving and riding user, feed back the information about the vehicle environment where the target object is located by using the speech information, and achieve the feedback of the object-searching result without affecting the user's driving and riding state, thereby satisfying the user's object-searching demand, effectively avoiding the distraction of the driver's attention, and effectively reducing occurrence of driving accidents while effectively improving the user's driving and riding experience.

### BRIEF DESCRIPTION OF THE DRAWINGS

The above and other features of the present invention will be described in detail hereinafter with reference to specific exemplary embodiments which are illustrated in the accompanying drawings. The exemplary embodiments are given by way of illustration only, and thus are not intended to limit the present invention. Among the figures,
FIG. 1 illustrates an exemplary system architecture adapted for a specific embodiment of a feedback method for object searching in a vehicle according to the present invention.
FIG. 2 illustrates a flow chart of a feedback method for object searching in a vehicle according to an embodiment of the present invention.
FIG. 3 illustrates a flowchart of a feedback method for object searching in a vehicle according to another embodiment of the present invention.
FIG. 4 illustrates a flowchart of a feedback method for object searching in a vehicle according to a further embodiment of the present invention.
FIG. 5 illustrates a flowchart of a feedback method for object searching in a vehicle according to yet another embodiment of the present invention.
FIG. 6 illustrates a schematic view of a feedback method apparatus for object searching in a vehicle according to an embodiment of the present invention.

### DETAILED DESCRIPTION OF EMBODIMENTS

The present invention will be described hereunder in detail by describing specific embodiments, to enable those having ordinary skill in the art to easily implement the present invention according to the content disclosed in the description. The embodiments described below are only partial embodiments rather than all embodiments of the present invention. Based on the embodiment described in the description, all other embodiments obtained by those having ordinary skills in the art without making inventive efforts fall within the scope of protection of the present invention. It needs to be appreciated that the embodiments and features in the embodiments described in the description may be combined with each other in a case where no conflicts occur.

The technical terms used in the text herein are only intended to illustrate specific embodiments and not intended to limit the present invention. Singular forms "one", "an" and "the" used herein also include plural forms "a plurality of", "multiple" and "these". As used herein, the terms such as "first" and "second" are only used to distinguish different features, steps, operations, elements and/or members etc., do not represent any specific technical meaning, nor do they represent a necessary logic order therebetween. The term "a plurality of' used in the text herein may refer to one or more, and the term "at least one" may refer to one, two or more. Any feature, step, operation, element and/or member mentioned herein may generally be understood as one or more unless otherwise specially indicated in the context. It should be appreciated that terms "include" and/or "comprise" used herein refer to there exists the feature, step, operation, element and/or member, and do not exclude the existence or addition of one or more other features, steps, operations, elements, members and/or combinations thereof. The term "and/or" used herein comprises any or all combinations of one or more relevant listed objects. Element suffixes "modules" and "units" herein are used only for ease of description, so they can be used interchangeably and do not have any distinguishing senses or functions.

When the prior art relevant to the description of the present invention is obvious for those skilled in the art, detailed depictions thereof will be omitted. It should be appreciated that depictions of embodiments in the description focus on emphasizing the differences between the embodiments, and reference may be made between the same or similar aspects between the embodiments, which will not be described in detail any more for the sake of brevity.

As science and technology develops, people's attention is often attracted by complex information so that people might overlook objects carried by themselves so that the objects are lost. Due to the limited space and occlusion in the vehicle, it is difficult for the driver and occupants in vehicle to find the lost objects by just casting a glance. Particularly when the driver is in a driving state, searching for the lost object will seriously distract the driver's attention and increases the accidental risks. For example, upon searching for the lost object, the driver has to transfer the attention from the road to the in-vehicle environment so that he cannot focus attention to the driving, thereby increasing the collision and accident risks; furthermore, since the attention is distracted, the driver's response time is longer, so that the driver cannot cope with urgent situations or other vehicles' changed actions in time. If the driver performs an action such as lowering the head or turning around to look for the lost object, he is likely to improperly operate the steering wheel, so that the control of the vehicle is unsteady, and the possibility of losing control of the vehicle is increased, particularly when the vehicle is running at a high speed or under complex traffic conditions.

Based on this, the present application provides a feedback method for object searching in a vehicle. By this method, a target object can be quickly and accurately found, information about a vehicle environment where the target object is located is fed back using a piece of speech information without affecting the user's driving and riding state, the user's demand for searching for the object can be satisfied, and the distraction of the driver's attention can be effectively avoided.

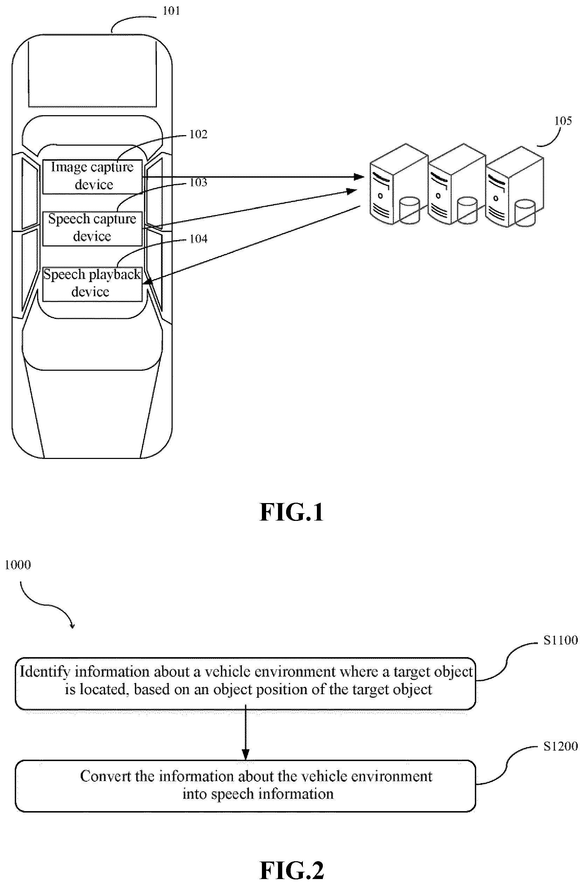

FIG. 1 schematically illustrates an exemplary system architecture 100 adapted for one specific embodiment of a feedback method for object searching in a vehicle according to the present invention. The system architecture 100 may comprise a vehicle 101, an image capture device 102, a speech capture device 103 and a speech playback device 104 disposed on the vehicle, and a server 105.

The image capture device 102 is disposed inside a cabin of the vehicle 101 and/or at the periphery of the vehicle and configured to capture image information inside the cabin of the vehicle 101 and/or image information at the periphery of the vehicle, so that the server 105 determines an object position of a target object and information about a vehicle environment where the target object is located according to the image information inside the cabin and/or the image information at the periphery of the vehicle. The image capture device 102 may comprise one or more image capture devices capable of acquiring image information inside the cabin of the vehicle 101 and/or image information at the periphery of the vehicle. The speech capture device 103 and the speech playback device 104 are disposed in the vehicle 101, wherein the speech capture device 103 is used for receiving an object-searching request input by a user via a speech, and the speech playback device 104 is used for outputting (playing) speech information determined by the server 105. The speech capture device 103 and the speech playback device 104 may each be provided with one or more, as long as the speech capture device(s) can capture the user's speech at positions in the cabin of the vehicle, and the playback volume of the speech playback device(s) can satisfy the user's reception demands at various positions.

The server 105 is connected to the image capture device 102, the speech capture device 103 and the speech playback device 104, respectively; the server 105 is used for receiving the object-searching request input by the user via the speech captured by the speech capture device 103, determining the target object to be sought for according to the object-searching request, then acquiring a vehicle environment image via the image capture device 102, determining the object position of the target object according to the vehicle environment image, identifying information about the vehicle environment where the target object is located and converting the information about the vehicle environment into speech information; finally, the server 105 sends the speech information to the speech playback device 104, and the speech playback device 104 plays the speech information to feed back an object-searching result to the user.

Optionally, the server 105 may be an independent physical server, may be a server cluster or a distributed system composed of a plurality of physical servers, and may also be a cloud server providing a basic cloud computing service such as a cloud service, a cloud database, cloud computing, a cloud function, a cloud storage, a network service, cloud communication, a middleware service, a domain service, a security service, CDN, big data and an artificial intelligence platform.

The image capture device 102, the speech capture device 103 and the speech playback device 104 are directly or indirectly connected to the server 105 in a wireless communication manner. Optionally, the wireless network described above uses a standard communication technique and/or protocol. The network is typically the Internet, but may also be any network including, but not limited to, a Local Area Network (LAN), a Metropolitan Area Network (MAN), a Wide Area Network (WAN), a mobile network, a wired network or wireless network, a private network, or a virtual private network, or any combinations thereof.

It needs to be appreciated that the feedback method for object searching in a vehicle according to the embodiment of the present application may be executed by a vehicle-mounted terminal, or by the server 105, or by the vehicle-mounted terminal in cooperation with the server 105. Accordingly, an apparatus for object searching in the vehicle may be disposed in the vehicle-mounted terminal, in the server 105, or in both the vehicle-mounted terminal and the server 105.

It is to be understood that the above-described system architecture 100 may not include the server 105 when the feedback method for object searching in the vehicle according to the embodiment of the present application is executed by the vehicle-mounted terminal.

It should be appreciated that the number and type of the image capture device 102, speech capture device 103 and speech playback device 104 in FIG. 1 are merely illustrative. In a specific implementation, there may be any number and types of image capture devices 102, speech capture devices 103 and speech playback devices 104 and servers, as actually needed.

As shown in FIG. 2, the present invention provides a feedback method 1000 for object searching in a vehicle. Specifically, the method 1000 comprises:
S1100: information about a vehicle environment where a target object is located is identified, based on an object position of the target object.

It needs to be appreciated that the target object is a lost object to be sought for by the driving and riding user, and name information of the target object, such as a mobile phone, a key, etc. may be extracted from an object-searching request from the driving and riding user. In the embodiment of the present application, the driving and riding user may input the object-requesting request via a speech.

The object position of the target object is specific position information of the target object, such as a coordinate position in a physical space, etc. In an embodiment of the present application, the specific position of the target object includes, but is not limited to, somewhere inside the vehicle and/or somewhere around the outside of the vehicle. Optionally, the object position of the target object may be determined by performing image identification on the images inside and outside the vehicle to determine specific position information of the target object.

As a feasible embodiment, the object-searching request input by the user via a speech is received, the target object to be sought for is determined according to the object-searching request, the vehicle environment image is acquired in response to the object-searching request, and the object position of the target object is determined according to the vehicle environment image.

Specifically, speech data input by the driving and riding user is received, the speech data is processed using a Natural Language Processing (NLP) technique to identify the content carried by the speech data; when the content carried by the speech data is the object-searching request, keyword extraction is further performed on the speech data to obtain the target object to be sought for. For example, if the speech data input by the user is "where is my mobile phone?", "mobile phone" is obtained after the keyword extraction and taken as the target object to be sought for. Whilst the speech data is determined as the object-searching request, the vehicle environment image is acquired in response to the object-searching request, for example, an internal environment image of the vehicle and/or an external environment image of the vehicle, i.e., an image of the interior of the cabin of the vehicle and/or an image of the surrounding of the vehicle, and then image identification is performed on the vehicle environment image to determine the specific position of the target object, for example, the information about the object position of the target object can be determined according to any one of the position of the user's mobile phone in the image and the position in the physical coordinate system.

Optionally, the speech capture device such as an in-vehicle speech system is disposed in the vehicle for receiving a speech input from the driving and riding user. After the system is activated (powered-on), the in-vehicle speech system enters an initialization phase and is automatically configured with necessary audio processing parameters such as a noise suppression level, speech activity threshold detection, etc. to optimize the quality of the speech capture. Then, the in-vehicle speech system enters a continuous detection mode with a low power consumption to detect the speech activity of the driving and riding user in the vehicle in real time to quickly respond to the object-searching request input by the driving and riding user via the speech.

It also needs be appreciated that the information about the vehicle environment where the target object is located is reference information for effectively positioning the target object, including an environmental reference object and/or a positional relationship between the target object and the environmental reference object. The environmental reference object is an object adjacent to the target object, or other object in the same divided area, or other object in a capture area corresponding to the same image capture device, or other objects being in a relationship with the target object, which is not specifically limited in the present application. For example, for "next to the center console of the vehicle" and "under the driver's seat", "the center console of the vehicle" and "the driver's seat" are environmental reference objects, and "next to" and "under" are positional relationships between the target object and the environmental reference objects. The environmental reference object comprises one or more of the center console of the vehicle, the driver's seat, the front passenger's seat, a rear seat, the driver's door, the front passenger's door, a rear door and a trunk.

S1200: the information about the vehicle environment is converted into speech information.

That is, it is possible to convert, by using a Text-to-Speech technique, the identified information about the vehicle environment where the target object is located into the speech information so that the speech information is played by the speech playback device and the driving and riding user can acquire the result of searching for the target object, and pick up the target object in a case that conditions permit, for example, the driver picks up the target object after pulling over to the side.

In a feasible embodiment, a text description corresponding to the target object and the information about the vehicle environment may be acquired and then converted into speech information based on the Text-to-Speech technique.

The text description corresponding to the target object and the vehicle environment information is a text description obtained by semantic fusion based on a text identifier of the target object, a text identifier of the environmental reference object and/or a text identifier corresponding to the positional relationship between the target object and the environmental reference object.

Specifically, the text identifier of the target object, the text identifier of the vehicle environment information and the text identifier corresponding to the positional relationship between the target object and the environmental reference object may be acquired respectively, and then, semantic fusion may be performed using the Natural Language Processing (NLP) technology to obtain the text description complying with a natural language order.

For example, when the target object is a "mobile phone", the vehicle environment information is a "vehicle center console", and the positional relationship between the target object and the environmental reference object is "adjacent", a text description "the mobile phone is beside the vehicle center console" may be obtained through semantic fusion. Alternatively, when the target object is a "key", the vehicle environment information is the "driver's seat", and the positional relationship between the target object and the environmental reference object is "under", a text description "the key is under the driver's seat" may be obtained through semantic fusion.

Furthermore, the text description is converted into speech information using a Text-to-Speech (TTS) technique. For example, a character text may be first converted into a language feature via text analysis, and then an acoustic feature is generated using an acoustic model to thereby obtain speech information that can be finally played by the speech playback device.

Optionally, when the Text-to-Speech conversion is performed, a friendly speech information format may be further set, for example, in the case that the text description that "the key is under the driver's seat" is determined, after adjustment in the friendly speech information format, the output speech information may be "your key is under the driver's seat", thereby improving the driving and riding user's experience.

In a feasible embodiment, a plurality of pieces of information about the vehicle environment where the target object is located may be identified on the basis of the object position of the target object, for example, "the mobile phone is on the seat", "the mobile phone is at the left side of the seat back cushion", etc. At this time, text descriptions that the target object corresponds to the plurality of pieces of information about the vehicle environment may be respectively obtained and then respectively converted into speech information for playing.

Optionally, the plurality of pieces of information about vehicle environment may be played in an identification order, or may be played in a preset playing order.

Thus, by the feedback method for object searching in a vehicle according to the embodiment of the present application, it is possible to, on the basis of quickly and accurately finding the target object for the driving and riding user, feed back the information about the vehicle environment where the target object is located by using the speech information, and achieve the feedback of the object-searching result without affecting the user's driving and riding state, thereby satisfying the use's object-searching demand, effectively avoiding the distraction of the driver's attention, and effectively reducing occurrence of driving accidents while effectively improving the user's driving and riding experience.

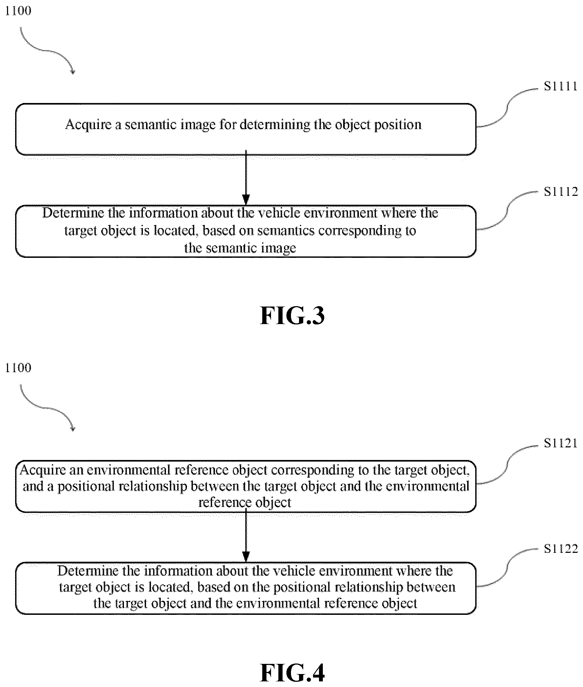

In a feasible embodiment, as shown in Fig. 3, S1100, the identifying information about a vehicle environment where a target object is located, based on an object position of the target object comprises:
S1111: a semantic image for determining the object position is acquired.

S1112: the information about the vehicle environment where the target object is located is determined, based on semantics of the semantic image.

It should be appreciated that the semantic image is an image for the target object and its object position, and comprises semantic information of an area corresponding thereto. Therefore, when the target object is identified from the image, the information about the vehicle environment where the target object is located may be determined according to the semantics (i.e., the semantic of the corresponding area) of the semantic image itself.

In an optional embodiment, since the environment layout of the cabin in the vehicle is complicated, images of different semantic areas may be captured with a plurality of image capture devices, respectively, and then the semantics corresponding thereto may be determined according to the image capture devices to which the images belong to.

Specifically, the semantic corresponding to the image capture device is determined based on the area that can be captured by each image capture device, so that the image captured by each image capture device is the semantic image corresponding to the semantic area. When the target object appears in a certain semantic image, the semantic corresponding to the object position of the target object is determined according to the semantic corresponding to the image capture device acquiring the semantic image. Exemplarily, if an image capture device is used to capture an image of the center console area in the vehicle, the semantic corresponding to the image capture device is the center console in the vehicle. At this time, if the target object is identified from the image captured by the image capture device, the vehicle environment where the target object is located is determined as the center console in the vehicle according to the semantic corresponding to the image capture device capturing the image; alternatively, another image capture device is used to capture an image of an area outside the driver's door of the vehicle, the semantic corresponding to the image capture device is the outside of the driver's door. At this time, if the target object is identified from the image captured by the image capture device, the vehicle environment where the target object is located is determined as the outside of the driver's door according to the semantic corresponding to the image capture device capturing the image.

In another optional embodiment, in order to ensure that no vehicle environment is missing, area images of corresponding areas may also be respectively captured with a plurality of image capture devices, and then the plurality of area images are stitched using an image stitching technique into a complete vehicle environment image, e.g., an internal environment image of the vehicle and an external environment image of the vehicle, and then the complete image is divided using a semantic division technique according to corresponding segmentation semantics into a plurality of semantic images.

Specifically, the vehicle environment image is acquired in response to the object-searching request, and then semantic segmentation is performed on the vehicle environment image with a semantic segmentation model, to obtain the semantic image corresponding to each piece of information about the vehicle environment.

The image semantic segmentation is segmenting pixels in the image according to differences in expressed semantics. The image semantic segmentation is a pixel-level classification and achieves semantic annotation of the entire image by classifying each pixel in the image. Specifically, the image semantic segmentation is classifying each pixel in the image, and determining a semantic category to which each pixel belongs, thereby obtaining a plurality of semantic pixel areas, the pixels in the same semantic pixel area belonging to the same semantic category. The semantic categories are language expressions divided according to differences in the expressed semantics. For example, in a vehicle environment image scenario, the segmentation semantics may be spatial areas corresponding to images, for example, the driver's cockpit, the front passenger's seat space, the rear seat space, the trunk etc. The driver's cockpit semantic image, the front passenger's seat space semantic image, the rear seat semantic image, the trunk semantic image etc. may be obtained through the semantic division.

In a specific embodiment, in response to the object-searching request, at least one image capture device in the vehicle cabin respectively acquires a corresponding internal area image, and at least one image capture device outside the vehicle respectively acquires a corresponding external area image, respectively, and then the at least one internal area image and the at least one external area image are respectively stitched to obtain an internal stitched image and an external stitched image. Segmentation semantics is defined according to the vehicle structure, and the internal stitched image and the external stitched image are input into an image semantic segmentation model to obtain the semantic image corresponding to each segmentation semantics, for example, the internal stitched image is segmented into the driver's cockpit semantic image, the front passenger's seat space semantic image, the rear seat semantic image and the trunk semantic image etc.; the external stitched image is segmented into a vehicle front semantic image, a driver's door outside semantic image, and a front passenger's door outside semantic image.

Furthermore, the obtained plurality of semantic images are respectively subjected to image identification to identify the target object from any one of the semantic images; when the target object is identified by an image identification model or an image identification algorithm, the segmentation semantics corresponding to the semantic image from which the target object is identified is acquired, and the segmentation semantics is taken as the information about the vehicle environment where the target object is located.

Exemplarily, when the target object is a "key", the semantic image from which the target object is identified is the driver's door outside segmentation image, i.e., the segmentation semantics corresponding to the semantic image from which the target object is identified is "driver's door outside", whereupon it is determined that the information about the vehicle environment where the target object "key" is located is "driver's door outside". It should be appreciated that in the embodiment, the "driver's door" is the environmental reference object, and "outside" is the positional relationship between the target object and the environmental reference object.

It should be appreciated that because of the complex layout of the environment within the vehicle cabin, the segmentation semantics may be refined according to actual circumstances, for example the driver's cockpit segmentation image may be further segmented into a driver's cockpit upper-part semantic image and a driver's cockpit lower-part semantic image, etc.

In a feasible embodiment, after at least one image capture device respectively acquires the corresponding area image, alignment processing may be performed on each area image, and then a panoramic image, namely, a panoramic image inside the vehicle cabin and a panoramic image outside the vehicle, is generated using an efficient image stitching algorithm. Then, steps of improving the image effect such as denoising and contrast enhancement are performed on the panoramic image to improve the quality of the panoramic image, thereby improving the accuracy and reliability of the target object identification.

Thus, according to the present application, it is possible to directly determine the information about the vehicle environment where the target object is located according to the semantics corresponding to the semantic image for identifying the target object when the object position of the target object is identified by using the reverse inference logic on the technical path for identifying the target object, without additional calculation overhead, and quickly and accurately obtain the information about the vehicle environment where the target object is located under the condition of reducing the image calculation cost.

In a feasible embodiment, it is also possible to directly use the stitched panoramic image to identify the target object, whereupon the panoramic image is not subjected to semantic segmentation, and the information about the vehicle environment where the target object is located cannot be determined directly through the segmentation semantics. Therefore, the information about the vehicle environment where the target object is located may be determined by identifying an environmental reference object around the target object after the target object is identified.

Specifically, as shown in FIG. 4, S1100 the identifying information about a vehicle environment where a target object is located, based on an object position of the target object comprises:
S1121: an environmental reference object corresponding to the target object, and a positional relationship between the target object and the environmental reference object are acquired.

In a feasible embodiment, an environmental reference object in an occlusion relationship with the target object is determined based on depth analysis.

The depth refers to a distance from a surface of an object to the image capture device in the scene, and the occlusion relationship includes but is not limited to the occlusion of the environmental reference object by the target object and the occlusion of the target object by the environmental reference object.

It should be appreciated that the occlusion relationship between objects in a spatial position may well help determine another object in the relationship and the positional relationship between the two objects. For example, when the mobile phone is under the driver's seat, the driver's seat usually occludes the mobile phone in the image; when the mobile phone is on the driver's seat, the mobile phone usually occludes the driver's seat in the image. Therefore, after the target object is identified, depth analysis is performed on the area where the target object is located, to determine an object in the occlusion relationship with the target object, type identification is performed on the object to obtain the environmental reference object, and the positional relationship between the target object and the environmental reference object is determined according to the depth relationship between the target object and the environmental reference object.

It also needs to be appreciated that when the occlusion relationship is determined by performing the depth analysis, at least two image capture devices are usually needed to respectively acquire images of the same area, and then the occlusion relationship between the target object and the environmental reference object is determined through the capture positions of the at least two image capture devices and the position information of the target object and the environmental reference object in the images.

Thus, in the present application it is possible to quickly position the environmental reference object in a positional relationship with the target object, determine the positional relationship between the target object and the environmental reference object through image identification and depth analysis, and effectively improve the efficiency of identifying the environmental reference object, thereby improving the object-searching efficiency.

In another feasible embodiment, the environmental reference object is determined by searching for an object adjacent to the target object.

Specifically, a pixel area corresponding to the target object is determined, a pixel search area is determined based on the pixel area, and any environmental reference object is identified from the pixel search area. When the environmental reference object is not identified, a scope of the pixel search area is expanded according to a preset rule until the environmental reference object is identified from the pixel search area.

A contour edge of the target object may be determined firstly, an area corresponding to a contour-encompassed area is the pixel area corresponding to the target object, and then a certain scope outside the contour edge of the target object is taken as the pixel search area. Then, image identification is performed in the pixel search area using an image identification technique; when a preset environmental reference object is identified, the environmental reference object corresponding to the target object is obtained; when the preset environmental reference object is not identified from the current pixel search area, the scope of the pixel search area is further expanded, and then identification is performed again in the expanded pixel search area until the environmental reference object is identified from the pixel search area.

It needs to be appreciated that in some embodiments of the present application, the environmental reference object may be any identified object inside or outside the vehicle, and include, but not limited to, an interior component arranged by the vehicle owner, such as a back cushion on a seat inside the vehicle, a seat back storage shelf behind a front row of seats and an article placed thereon, or a ground surface, tires, etc. outside the vehicle, which is not specifically limited in the present application. In other embodiments of the present application, the environmental reference object is usually preset in advance, such as the driver's seat, the center console in the vehicle etc. so that the environmental reference object for reference in positioning is a reference object that can be directly determined by the driving and riding user, thereby avoiding problems such as ineffective feedback of the object-searching result or the occurrence of repeated object searching.

Optionally, the pixel search area directly determined based on the pixel area corresponding to the target object may be the entire area image containing the target object; when the pixel search area is expanded, it may be expanded to the area image acquired by an adjacent image capture device, or a scope of an adjacent area determined upon stitching.

In some feasible embodiments, the expanding of the pixel search area may not be stopped after the reference object is identified, that is, after the environmental reference object is identified, the scope of the pixel search area may be further expanded until a preset scope of the pixel search area is reached, and at least one object identified during the expanding of the search area is taken as the environmental reference object corresponding to the target object.

That is to say, when the environmental reference object corresponding to the target object is acquired, and the positional relationship between the target object and the environmental reference object is acquired, the identification may be performed based on the above-mentioned stitched image, or the identification may be performed directly without stitching being performed, i.e., the identification of the target object is performed directly using the images respectively captured by a plurality of image capture devices, and then the identification of the environmental reference object is performed. It should be appreciated that after the environmental reference object is identified, the positional relationship between the target object and the environmental reference object may be obtained by identifying the positional relationship between the target object and the environmental reference object.

In this way, an object visually adjacent to the target object may be identified from the pixel search area, with the same visual experience as that when the driving and riding user searches for the target object, so that the driving and riding user can easily observe and locate the object when picking up the target object, and the user's experience can be improved.

In a further feasible embodiment, when identification is directly performed without stitching, object identification may be directly performed in the entire image of the image containing the target object, and at least one picture identified from the image may be taken as the environmental reference object. Exemplarily, when the user's mobile phone is left on the seat, object identification may be performed in the entire image captured by the image capture device to obtain at least one environmental reference object, such as the seat and a back cushion on the seat.

S1122: the information about the vehicle environment where the target object is located is determined, based on the environmental reference object and the positional relationship between the target object and the environmental reference object.

Specifically, the environmental reference object and the positional relationship between the target object and the environmental reference object are combined as the information about the vehicle environment where the target object is located.

Thus, the present application proposes two implementation methods for determining the information about the vehicle environment corresponding to the target object when semantic segmentation processing is not performed, enriches scenarios and device conditions for determining the information about the vehicle environment, and improves the generalization capability of the method for object searching in the vehicle according to the present application.

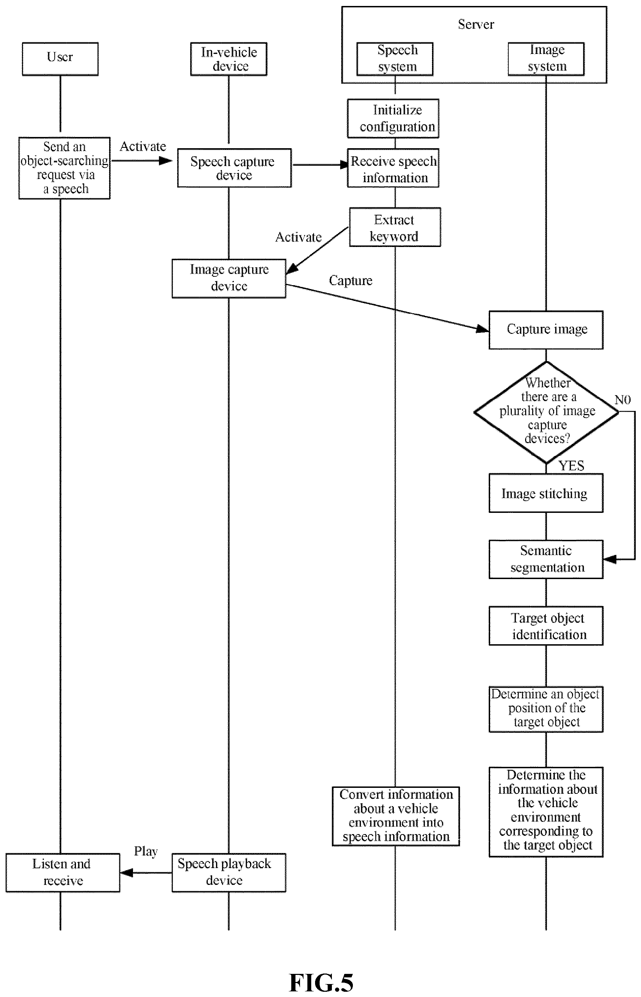

In one particular embodiment, as shown in FIG. 5, the feedback method for object searching in the vehicle may comprise: the in-vehicle speech system initializes the configuration; when the driving and riding user sends the object-searching request, the speech capture device is activated to receive the object-searching request; the in-vehicle speech system may extract a keyword from the received object-searching request to obtain the target object; in response to receiving the object-searching request, the in-vehicle image capture device is activated to capture an image; then, judgement is made as to whether there are a plurality of in-vehicle image capture devices; if YES, a plurality of area images captured by the plurality of image capture devices are stitched, and then, semantic segmentation is performed; if NO, semantic segmentation is directly performed without the stitching being performed; identification of the target object is performed in the segmented images, to determine the object position of the target object, then the vehicle environment information corresponding to the target object is determined based on the object position of the target object, the vehicle environment information corresponding to the target object is converted into speech information, and the speech information is sent to the speech playback device for playing.

It should be appreciated that the feedback method for object searching in a vehicle according to embodiments of the present application may also be applied to other similar environments, such as a home environment or an office environment to help the user to search for daily necessities and office supplies, or applied to an environment such as a retailer and a supermarket to help the user to search for goods he needs to buy, which is not specifically limited in the present application.

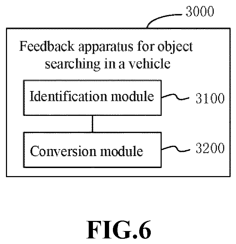

Based on the same inventive concept, FIG. 6 illustrates a schematic view of a feedback apparatus 3000 for object searching in a vehicle according to an embodiment of the present invention. The apparatus 3000 comprises: an identification module 3100 configured to identify information about vehicle environment where a target object is located, based on an object position of the target object; in an embodiment of the present invention, the identification module 3100 may be configured to perform step S1100 in FIG. 2, steps S1111-S1112 in FIG. 3, steps S1121-S1122 shown in FIG. 4, and the steps corresponding to step S1100 in FIG. 2, steps S1111-S1112 in FIG. 3 and steps S1121-S1122 shown in FIG. 4 in the description herein; the apparatus 3000 further comprises a conversion module 3200 configured to convert the information about the vehicle environment into speech information; in the embodiment of the present invention, the conversion module 3200 may be configured to perform step S1200 in FIG. 2 and the step corresponding to step S1200 in FIG. 2 in the description herein.

It may be appreciated that the structure shown in FIG. 6 is merely illustrative and that the apparatus may further comprise more or fewer modules or components than those shown in FIG. 6 or have a configuration different from that shown in FIG. 6.

In addition, the present application further provides a computer device. According to an embodiment of the present invention, the computer device may comprise a memory, a processor, and a computer program stored on the memory and executable on the processor, wherein the computer program, when executed by the processor, may implement the steps of the feedback method for object searching in a vehicle described in the description herein.

In addition, the present application further provides a computer-readable medium which may be included in the apparatus described in the above embodiments, or may also be standalone and not assembled into the apparatus. The computer-readable medium carries one or more programs which, when executed by the apparatus, cause the apparatus to perform the steps of the feedback method for object searching in a vehicle described in the description herein.

In addition, the present application further provides a computer program product comprising computer instructions which, when executed by a processor, may perform the steps of the feedback method for object searching in a vehicle described in the description herein.

In particular, the embodiment processes described above with reference to the flowcharts in the drawings may be implemented as a computer software program. For example, embodiments disclosed in the description of the present application include a computer program product comprising a computer program embodied on a computer-readable medium, the computer program containing program code for performing the methods illustrated in the flowcharts in the drawings, the computer program being executed by a processor to perform the methods of the present application.

It needs to be appreciated that the computer-readable medium described herein can be either a computer-readable signal medium or a computer-readable storage medium, or any combination of the two. The computer readable storage medium for example may be, but not limited to, an electronic, magnetic, optical, electromagnetic, infrared, or semiconductor system, apparatus, or device, or any combinations of the above. More specific examples of the computer-readable storage medium may include, but are not limited to: a computer diskette, a hard disk, a Random Access Memory (RAM), a Read-Only Memory (ROM), an Erasable Programmable Read-Only Memory (EPROM), a flash memory, a portable Compact Disk Read-Only Memory (CD-ROM), an optical storage device, a magnetic storage device, or any suitable combinations of the above.

In the present application, a computer readable storage medium may be any tangible medium that can contain or store a program for use by or in combination with an instruction execution system, apparatus, or device. In the present application, a computer readable signal medium may include a propagated data signal with computer readable program code embodied therein, for example, in baseband or as part of a carrier wave. Such a propagated signal may take a variety of forms, including, but not limited to, electro-magnetic, optical, or any suitable combination thereof. A computer readable signal medium may be any computer readable medium that is not a computer readable storage medium and that can send, propagate, or transmit a program for use by or in combination with an instruction execution system, apparatus, or device. Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object-oriented programming languages such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The flowchart and block diagrams in the Drawings illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the drawings. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by dedicated hardware-based systems that perform the specified functions or acts, or combinations of dedicated hardware and computer instructions.

The units or modules involved in the embodiments of the present application may be implemented by software or hardware. The above-mentioned units or module may also be configured in a processor, and for example, may be described as: a processor comprising an identification module and a conversion module, etc. The names of these units or modules do not constitute limitations on the units or modules themselves in some cases.

All documents mentioned in the description are herein incorporated by reference as if each document was fully incorporated by reference herein.

In addition, it should be appreciated that those skilled in the art, upon reading through the foregoing description of the present invention, may make various alterations and modifications to the present invention, and all such equivalents are intended to fall within the scope of the present invention.

## Claims

1. A feedback method (1000), preferably a computer-implemented method, for object searching in a vehicle, comprising:
identifying (S1100) information about a vehicle environment where a target object is located, based on an object position of the target object; and
converting (S1200) the information about the vehicle environment into speech information.

2. The feedback method (1000) for object searching in the vehicle according to claim 1, wherein identifying (S1100) the information about the vehicle environment where the target object is located, based on the object position of the target object comprises:
acquiring (S1111) a semantic image for determining the object position; and
determining (S1112) the information about the vehicle environment where the target object is located, based on semantics corresponding to the semantic image.

3. The feedback method (1000) for object searching in the vehicle according to claim 2, further comprising:
acquiring a vehicle environment image; and
performing semantic segmentation on the vehicle environment image using a semantic segmentation module, to obtain semantic images respectively corresponding to respective information objects of the information about the vehicle environment.

4. The feedback method (1000) for object searching in the vehicle according to claim 1, wherein identifying (S1100) the information about the vehicle environment where the target object is located, based on the object position of the target object comprises:
acquiring (S1121) an environmental reference object corresponding to the target object, and a positional relationship between the target object and the environmental reference object; and
determining (S1122) the information about the vehicle environment where the target object is located, based on the environmental reference object and the positional relationship between the target object and the environmental reference object.

5. The feedback method (1000) for object searching in the vehicle according to claim 4, wherein acquiring (S1121) the environmental reference object corresponding to the target object comprises:
determining the environmental reference object having an occlusion relationship with the target object based on depth analysis.

6. The feedback method (1000) for object searching in the vehicle according to claim 4 or 5, wherein acquiring (S1121) the environmental reference object corresponding to the target object comprises:
determining a pixel area corresponding to the target object;
determining a pixel search area based on the pixel area, and identifying the environmental reference object in the pixel search area; and
in response to the environmental reference object not being identified, expanding a scope of the pixel search area based on a preset rule until the environmental reference object is identified in the pixel search area.

7. The feedback method (1000) for object searching in the vehicle according to any one of claims 1 to 6, wherein converting (S1200) the information about the vehicle environment into the speech information comprises:
acquiring a text description corresponding to the target object and the information about the vehicle environment; and
converting the text description into the speech information based on a Text-to-Speech technique.

8. The feedback method (1000) for object searching in the vehicle according to claim 7, wherein acquiring the text description corresponding to the target object and the information about the vehicle environment comprises:
acquiring a text identifier of the target object, a text identifier of an environmental reference object and/or a text identifier corresponding to a positional relationship between the target object and the environmental reference object, respectively; and
performing semantic fusion on the text identifiers and the positional relationship to obtain the text description.

9. The feedback method (1000) for object searching in the vehicle according to any one of claims 1 to 8, further comprising:
receiving an object searching request input by a user speech, and determining the target object to be sought for based on the object searching request; and
acquiring a vehicle environment image in response to the object searching request, and determining the object position of the target object based on the vehicle environment image.

10. The feedback method (1000) for object searching in the vehicle according to any of claims 1 to 9, wherein the information about the vehicle environment comprises an environmental reference object and/or a positional relationship between the target object and the environmental reference object.

11. A feedback apparatus (3000) for object searching in a vehicle, comprising:
an identification module (3100) configured to identify information about a vehicle environment where a target object is located, based on an object position of the target object; and
a conversion module (3200) configured to convert the information about the vehicle environment into speech information.

12. A computer device, comprising:
a memory;
a processor; and
a computer program stored on the memory and executable on the processor, wherein the program, when executed by the processor, implements the steps of the method according to any of claims 1-10.

13. A computer-readable storage medium having a computer program stored thereon, wherein the program, when executed by a processor, implements the steps of the method according to any of claims 1-10.

14. A computer program product comprising computer instructions, wherein the computer instructions, when executed by a processor, implements the steps of the method according to any of claims 1-10.
